(19) Europäisches Patentamt
European Patent Office
Office européen des brevets

(11) **EP 0 650 244 B1**

(12) **EUROPEAN PATENT SPECIFICATION**

(45) Date of publication and mention
of the grant of the patent:
**29.07.1998 Bulletin 1998/31**

(51) Int Cl.$^6$: **H02K 13/00**, H01R 39/14

(21) Application number: **94307666.1**

(22) Date of filing: **19.10.1994**

(54) **Miniature motor**

Kleinmotor

Moteur miniature

(84) Designated Contracting States:
**DE FR GB IT**

(30) Priority: **20.10.1993 JP 262032/93**

(43) Date of publication of application:
**26.04.1995 Bulletin 1995/17**

(73) Proprietor: **MABUCHI MOTOR KABUSHIKI KAISHA**
**Matsudo-shi, Chiba-ken (JP)**

(72) Inventor: **Yuhi, Toshiya, c/o Mabuchi Motor K. K.**
**Inba-gun, Chiba-ken (JP)**

(74) Representative: **Hitchcock, Esmond Antony**
**Lloyd Wise, Tregear & Co.,**
**Commonwealth House,**
**1-19 New Oxford Street**
**London WC1A 1LW (GB)**

(56) References cited:
**DE-A- 4 034 277**        **GB-A- 1 513 502**

• **PATENT ABSTRACTS OF JAPAN vol. 10, no. 108 (E-398) (2165) 23 April 1986 & JP-A-60 245 439 (TOA GOSEI KAGAKU KOGYO) 5 December 1985**

**Description**

This invention relates to a miniature motor of the type commonly used in power tools, for example. It is especially directed at such motors in which the axial alignment of the armature and commutator is of particular importance.

In a known motor construction this requirement is addressed by providing a projection on the commutator core which engages one of a number of grooves provided on the armature at predetermined circumferential positions. However, the width of the projection and the groove may vary, thereby making their mutual engagement difficult. This may result in an unreliable assembly or even failure of the joint. Also, the edge of the projection may be chipped upon insertion into the recess, or the projection itself broken. The creation of such chips within the motor, or consequential reduced accuracy in the relative positioning of the commutator and the armature may impair the performance of the motor.

The provision of a clearance between the groove and the projection may assist the assembly operation and reduce the likelihood of chipping or breakage of the projection occurring. However, this can result in a phase shift between the armature and the commutator, leading to variations in the performance and working life of the motors.

Another problem arising in the assembly of a motor having the above type of construction is the adjustment of the axial length of motor components on the rotor shaft between the motor bearings. The conventional use of washers of different thicknesses and in various combinations in order to make the appropriate adjustments is a time-consuming and troublesome process.

GB-A-1513502 discloses an electric motor in which a sleeve is fitted onto the motor shaft between the armature and the commutator. A recess formed in one end of the sleeve engages a tongue projecting from an insulator at the adjacent end of the armature, and a boss at the other end of the sleeve is inserted in a positioning hole formed in an adjacent disc-shaped insulator of the commutator.

The present invention is directed at a miniature motor construction in which the accuracy of the relative circumferential positioning of the armature and the commutator is improved, and the axial length of the rotor may be more precisely controlled. It further seeks to achieve these aims in a construction which may be easily assembled.

The basic construction of an electric motor of the invention has a tubular case closed at one end with permanent magnets fitted to the inner wall thereof; an end cap fitted to the other open end of the case, with bearings in the closed case end and end cap supporting a rotor comprising an armature core and a commutator within the case; brushes making sliding contact with the commutator; input terminals connected to the brushes; and a sleeve interposed between the juxtaposed end faces of the armature core and the commutator body, projections and recesses aligning the armature core, the sleeve and the commutator body. According to the invention, each axial end of the sleeve is formed with a projection having a central groove, the end face of the armature core is formed with a groove for receiving the projection on one end of the sleeve, and the end face of the commutator body is formed with a plurality of circumferentially spaced grooves, one of which receives the projection on the other end of the sleeve. The sleeve can thus locate the commutator relative to the armature core both angularly and axially, and the assembly of commutator, sleeve and armature core can be further secured by bonding with cement or an adhesive. It will be understood that the proper location of the commutator and the armature core can result in a gap or space being formed at either or each end of the sleeve.

A known motor construction and some embodiments of the invention will now be described by way of example with reference to the accompanying drawings wherein:

Figure 1 is a longitudinal partly sectional view of a conventional miniature motor;

Figure 2 is an enlarged view of the commutator shown in Figure 1;

Figures 3A and 3B are cross-sectional views along lines A-A and B-B respectively, in Figure 2;

Figure 4 is a side view of a motor construction according to one embodiment of the invention;

Figures 5A and 5B are an enlarged end view and side view, respectively, of the commutator shown in Figure 4;

Figure 6 is an end view of the armature core shown in Figure 4;

Figures 7A and 7B are an enlarged end view and side view, respectively, of the sleeve shown in Figure 4;

Figure 8 is an enlarged perspective view of the projection shown in Figures 7A and 7B;

Figure 9 consists of end views of sleeves similar to that shown in Figures 7A and 7B illustrating different relative positions of the projections provided on both end faces;

Figures 10A and 10B are end views of the armature core and the commutator respectively, according to a second embodiment of the invention;

Figure 11 consists of end views of sleeves for use with the armature core of Figure 10A and the commutator of Figure 10B;

Figure 12 is a transverse sectional view of a miniature motor according to a third embodiment of the invention.

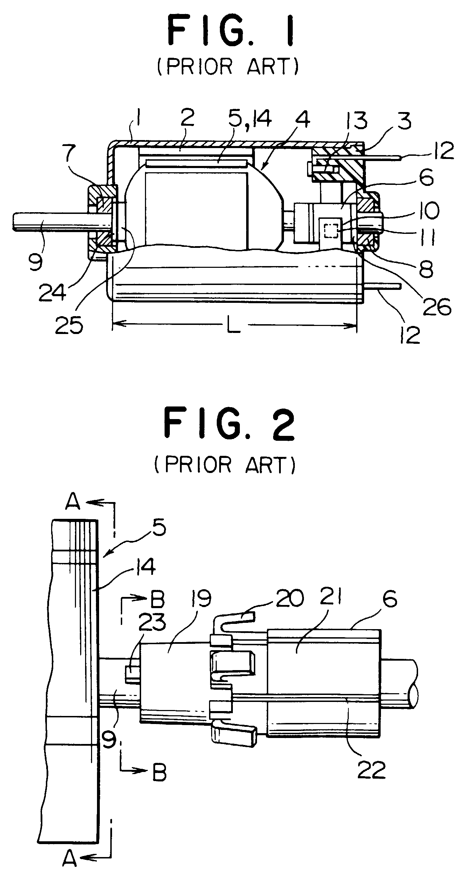

The motor shown in Figure 1 has a case 1 made of a metallic material, such as mild steel, which is closed at one end. A permanent magnet 2, of arc-segment shape, for example, is fixedly fitted to the inner surface thereof. An end cap 3 is made of a thermoplastic resin material, for example, and closes the open end of the case 1. Rotor 4 comprises an armature iron core 5 facing the permanent magnet 2, and a commutator 6, and is rotatably supported by bearings 7 and 8 provided on the closed end of the case 1 and on the end cap 3, respectively. A shaft 9 passes through the rotor 4.

A brush arm 10 is provided on the end cap 3, made of an electrically conductive material. It has a brush 11 at the distal end thereof for making sliding contact with the circumferential surface of the commutator 6. A terminal 12 is electrically connected to the brush arm 11 and is fixedly fitted to the end cap with a set screw 13, for example. Power may be fed from an external supply to windings of the armature core 5 via the terminal 12, the brush arm 10, the brush 11 and the commutator 6. Thus, as electric current is fed to the windings of the armature 5, the motor operates in a known manner to drive external equipment (not shown).

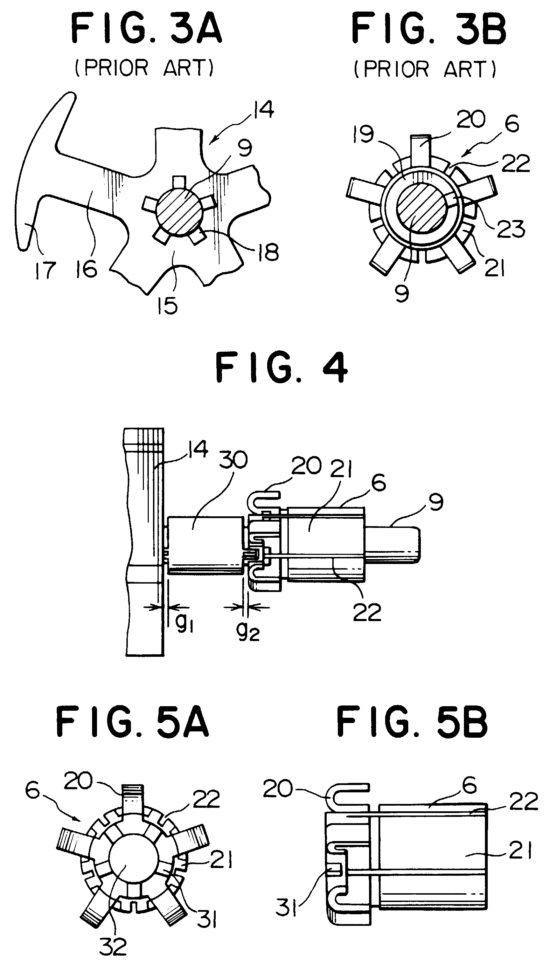

In Figures 2, 3A and 3B, the armature core 14 is formed from laminated thin iron sheets, for example, on which a winding (not shown) is wound to form the armature. A boss 15, arms 16 and pole pieces 17 are all integrally formed with each other.

A groove 18 is provided on the boss at the same circumferential position as each arm 16. In the configuration shown in Figures 2, 3A and 3B, the armature has five equally circumferentially spaced arms, with corresponding pole pieces 17 and grooves 18.

A tubular commutator core 19 is made of an insulating material and a plurality of commutator segments 21 of arc-segment shape in cross-section are fixedly fitted at equal circumferential spacings to the outer surface thereof to form commutator 6. Substantially U-shaped tongues 20 are integrally provided on the side edges of the commutator segments 21 facing the core 14. A projection 23 is integrally provided on the end face of the core member 19 for press-fitting to any one of the grooves 18 formed on the core 14.

With the aforementioned construction, after the core 14 and the commutator 6 are fitted to the shaft 9, the commutator 6 is positioned circumferentially such as to correspond with any one of the grooves 18 (see Figure 3A) on the core 14 in Figure 2. The projection 23 is then press-fitted into the groove 18 until the end face of the core 14 makes contact with that of the core member 19 of the commutator 6 Both members may therefore be positioned and fixedly fitted relative to each other.

However, the respective widths of the groove 18 and the projection 23 in the circumferential direction tend to vary for example, as a result of manufacturing tolerances. The press-fitting allowance also tends to fluctuate. This often makes the press-fitting operation difficult resulting in an inadequate joint between the core 14 and the commutator 6, and motor failure in extreme cases. Also the side of the projection 23 may be chipped by the edge of the groove 18, or the projection 23 may be broken during the press-fitting operation. The creation of chips within the motor or inaccurate positioning of the components on the rotor may degrade the performance of the motor.

The axial length L of the rotor 4 between the bearings 7 and 8 shown in Figure 1 is determined by the sum of the axial dimensions of a washer 24 for adjusting the protruded dimensions of the shaft 9, a thrust-receiving bushing 25, the rotor 4, the commutator 6 and an adjusting washer 26. There is some degree of variation in all these dimensions. It is therefore necessary to prepare several types of adjusting washers 26 of different thicknesses, and use them in various combinations to adjust the length L, which is a time-consuming process.

In the embodiment of the invention shown in Figure 4, a tubular sleeve 30, made of a thermoplastic resin material, for example, is fitted around the rotor shaft between the core 14 and the commutator 6 with gaps $g_1$ and $g_2$ on either side. A gap may be present on only one side of the sleeve 30. As shown in Figures 5A and 5B, a plurality of grooves 31 are provided on one end of the commutator 6 (to the left in Figures 5B) at the same circumferential positions as the slits 22 between the commutator segments 21. The rotor shaft passes through the shaft holes 32, 34 and 33 of the commutator 6, sleeve 30 and armature core 14, respectively.

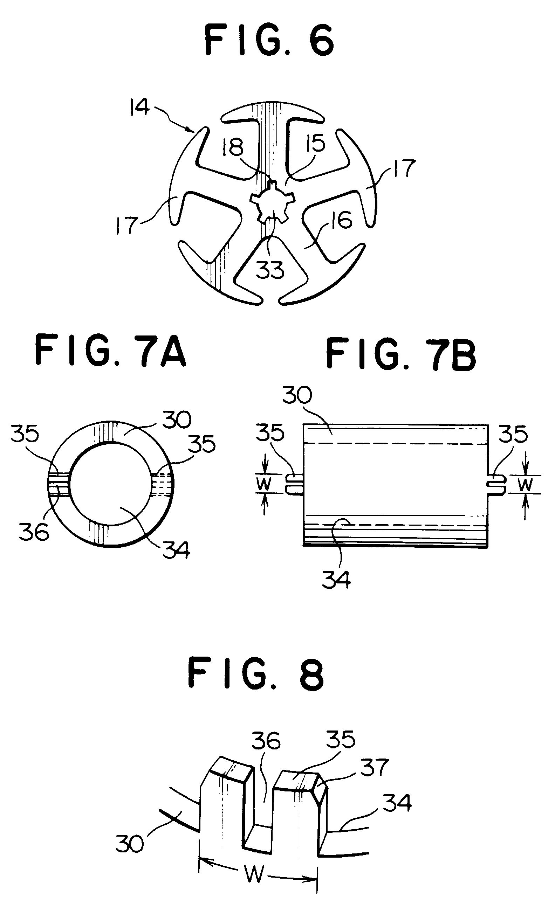

In Figures 7A, 7B and 8, a projection 35 is integrally formed on each end face of the sleeve 30. The circumferential width W of the projections 35 is such that they can be press-fitted into the grooves 31 and 18 shown in Figures 5A, 5B and 6. A groove 36 is provided in the middle part of the projection 35 along the axial direction with respect to the sleeve 30. A bevel 37 formed on the outside edge of the projection 35.

With the aforementioned construction, the armature core 14, the sleeve 30 and the commutator 6 are fitted to the shaft 9, as shown in Figure 4, and positioned such that they match with any one of the grooves 31 and 18 provided on the commutator 6 and the core 14, respectively. Thus, each projection 35 can be easily press-fitted into a respective groove 31 and 18, thereby defining the circumferential position of the core 14 and the commutator 6. The axial length of the rotor 4 shown in Figure 1 can be readily set to a predetermined length by adjusting the gaps $g_1$ and $g_2$ ($g_1$ may not necessarily be equal to $g_2$) shown in Figure 4. The sleeve 30, the core 14 and the commutator 6 are then tightly bonded together by adhesive or other appropriate means. The armature winding is subsequently wound on the core 14 and electrically connected to the commutator 6.

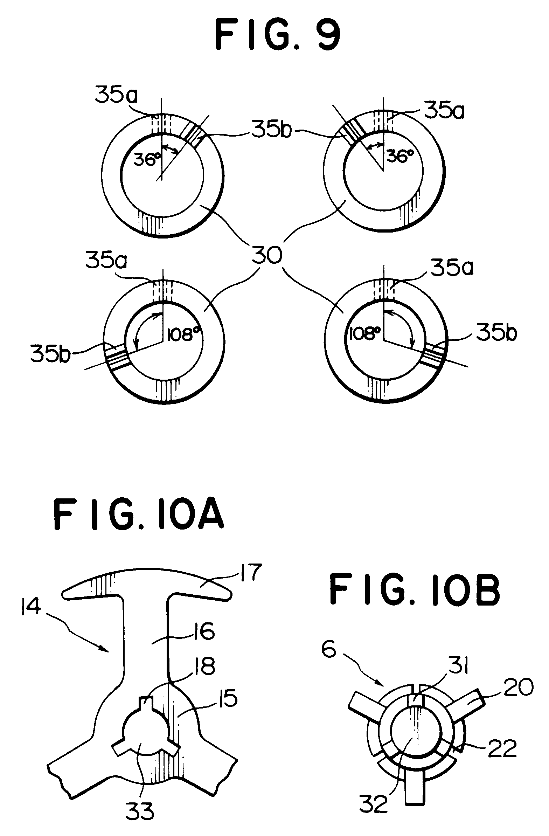

In Figure 9, a projection 35a denoted by broken lines may be press-fitted into the uppermost groove 18 on the core 14 in the orientation shown in Figure 6, whilst projection 35b denoted by solid lines may be press-fitted into one of grooves 31 on the commutator 6 shown in Figures 5A and 5B. That is, even when the central angle between the relative positions of the projections 35a and 35b is set as shown in Figure 9, aside from 180 degrees shown in Figure 7A, the commutator 6 and the core 14 shown in Figures 5A, 5B and 6 can be positioned properly.

In an arrangement where the relationship between the grooves 31 and 18 provided on the commutator 6 and the core 14 shown in Figures 5A, 5B and 6 is such that the grooves 31 and 18 are circumferentially interposed, the central angle between the relative positions of the projections 35a and 35b provided on the sleeve 30 shown in Figure 9 for n pieces of grooves can be generally expressed as follows.

Let the clockwise central angle between the projection 35b and the projection 35a as the datum be ω, and we have

$$\omega = ((1 + 2m)/n) \times 180° \qquad (1)$$

where m is zero or any positive integer. Thus, the central angle can be set to any one of the values derived from this equation.

Figures 10A and 10B are end views illustrating the core and the commutator, respectively, in a second embodiment of this invention. Like parts are indicated by line numerals in Figures 5A, 5B and 6. Figure 10A and 10B show three grooves 18 and 31 disposed at the same circumferential positions. Even in this arrangement, the core 14 and the commutator 6 can be positioned by using the sleeve 30 shown in Figures 7A, 7B and 8.

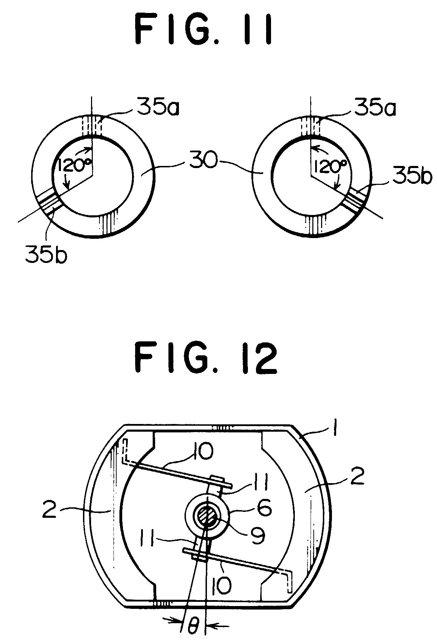

Figure 11 is an end view illustrating an example of the sleeve 30 that can be used for positioning the core 14 and the commutator 6 shown in Figures 10A and 10B. Like parts are indicated by like numerals shown in Figure 9. As is apparent from Figure 11, the central angle between the relative positions of the projections 35a and 35b provided on the sleeve 30 in this arrangement is 120 degrees.

In an arrangement where there is a relationship between the grooves 18 and 31 as shown in Figures 10A and 10B, the central angle ω between the relative positions of the projections 35a and 35b provided on the sleeve 30 shown in Figure 11 for n pieces of grooves can be obtained in the same manner as with the equation (1) above:

$$\omega = m/n \times 360° \qquad (2).$$

Thus, the central angle can be set to any of the value derived from the equation (2).

Figure 12 is a cross-sectional view of a miniature motor in the third embodiment of this invention. Like parts are indicated by like numerals in Figure 1. Figure 12 shows the so-called "flat type" of miniature motor in which the outside shape of the case 1 is formed into a drum shape with the distance across the sides of the case 1 coming in contact with the edges of the permanent magnets 2 in the case 1 being made smaller than the distance between the sides of the case 1 on the inside surface of which the permanent magnets 2 are fitted. In this type of motor, the angle between a line connecting the centres of the brushes 11, and the central line between the permanent magnets 2 is set to θ, as shown in Figure 12, to maintain the effective length of the brush arm 10 and electrical input to the armature.

This makes it necessary to provide a phase difference of θ between the rotor and the commutator (both not shown). In other words, the phase of the commutator has to be advanced by θ in the clockwise direction in Figure 12. In this type of motor, the sleeve 30 as shown in Figures 9 and 11 can be used, but the central angle ω between the relative positions of the projections 35a and 35b in both figures must be set in the following manner.

$$\omega = ((1 + 2m)/n) \times 180° + \theta \qquad (3)$$

$$\omega = m/n \times 360° + \theta \qquad (4).$$

The central angle ω can be set appropriately by setting the relative positions of cavities for molding the projections 35a and 35b in a metal die for molding the sleeve 30.

This invention having the aforementioned construction and operation can accomplish the following effects.

(1) The accuracy in positioning the core and the armature, both constituting the armature, in the circumferential direction can be improved while preventing phase shift between both, leading to stabilized motor performance.
(2) The axial length accuracy of the rotor can be improved, and vibration and mechanical noise can be reduced because the axial clearance between the bearings can be reduced.
(3) Since an elastic deformation function may be imparted to the projections provided on both end faces of the sleeve, the core and the commutator can be assembled easily and positively.
(4) The creation of chips from the projections or their breakage, can be eliminated. This leads to improved productivity.

## Claims

1. An electric motor having a tubular case (1) closed at one end with permanent magnets (2) fitted to the inner wall thereof; an end cap (3) fitted to the open end of the case (1), with bearings (7, 8) in the closed case end and end cap supporting a rotor comprising an armature core (5, 14) and a commutator (6) within the case (1); brushes (11) making sliding contact with the commutator (6); input terminals (12) connected to the brushes (11); and a sleeve (30) interposed between the juxtaposed end faces of the armature core (5, 14) and the commutator body (6), projections and recesses aligning the armature core (5, 14), the sleeve (3) and the commutator body,

CHARACTERISED IN THAT

each axial end of the sleeve (30) is formed with a projection (35) having a central groove (36), the end face of the armature core (5, 14) is formed with a groove (18) for receiving the projection (35) on one end of the sleeve (30), and the end face of the commutator body (6) is formed with a plurality of circumferentially spaced grooves (31), one of which receives the projection (35) on the other end of the sleeve (30).

2. An electric motor according to Claim 1 wherein the sleeve is formed in a resin.

3. An electric motor according to Claim 1 or Claim 2 wherein there is the same plurality of grooves (18,31) formed in the juxtaposed faces of the armature core (14) and the commutator body, and the relative angular positions of the projections (35) on either end of the sleeve (30) is governed by the formula:

$$\omega = [(1 + 2m)/n] \times 180°$$

where

$\omega$ is the angular displacement between the projections around the sleeve axis;
m is 0 or any positive integer; and
n is the number of grooves in each juxtaposed face of the armature core and commutator body.

4. An electric motor according to Claim 1 or Claim 2 wherein there is the same plurality of grooves (18,31) formed in the juxtaposed faces of the armature core (14) and the commutator body and the relative angular positions of the projections (35) on either end of the sleeve (30) is governed by the formula:

$$\omega = m/n \times 360°$$

where

$\omega$ is the angular displacement between the projections around the sleeve axis;
m is 0 or any positive integer; and
n is the number of grooves in each juxtaposed face of the armature core and commutator body.

5. An electric motor according to Claim 3 or Claim 4 wherein the angular displacement ($\omega$) is increased by an amount ($\theta$) to create a phase difference between the rotor and the commutator.

6. An electric motor according to any preceding Claim in which a gap is defined between the sleeve (30) and at least one of the armature core and the commutator body.

7. An electric motor according to any preceding Claim wherein the armature core (14), the sleeve (30) and the commutator body are bonded together to form an integral unit of fixed axial length.

**Patentansprüche**

1. Elektromotor aufweisend ein rohrförmiges Gehäuse (1), das an einem Ende geschlossen ist und an dessen Innenwand Dauermagnete (2) fest angepaßt sind; eine Stirnkappe (3), die am offenen Ende des Gehäuses (1) angebracht ist, wobei Lager (1, 8) am geschlossenen Gehäuseende und an der Stirnkappe vorgesehen sind, die einen Rotor, der einen Ankerkern (5, 14) und einen Kommutator (6) hat, im Gehäuse drehbar haltern; Bürsten (11) zum Herstellen eines Gleitkontakts mit dem Kommutator (6); Eingangsanschlüsse (12), die mit den Bürsten (11) verbunden sind; und eine Hülse (30), die zwischen den beieinanderliegenden Stirnflächen des Ankerkerns (5, 14) und des Kommutatorkörpers (6) angeordnet ist, wobei Vorsprünge und Ausnehmungen den Ankerkern (5, 14), die Hülse (3) und den Kommutatorkörper miteinander ausrichten,

**dadurch gekennzeichnet,**

daß jedes axiale Ende der Hülse (30) mit einem Vorsprung (35) versehen ist, der eine Mittennut (36) hat, die Stirnfläche des Ankerkerns (5, 14) mit einer Nut (18) zur Aufnahme des Vorsprungs (35) an einem Ende der Hülse (30) ausgebildet ist und die Stirnfläche des Kommutatorkörpers (6) mit einer Vielzahl in Umfangsrichtung beabstandeter Nuten (31) ausgebildet ist, von denen eine den Vorsprung (35) am anderen Ende der Hülse (30) aufnimmt.

2. Elektromotor nach Anspruch 1, bei dem die Hülse aus Kunststoff hergestellt ist.

3. Elektromotor nach Anspruch 1 oder Anspruch 2, bei dem dieselbe Mehrzahl Nuten (18, 31) in den nebeneinanderliegenden Stirnflächen des Ankerkerns (14) und des Kommutatorkörpers ausgebildet ist und die relativen Winkelpositionen der Vorsprünge (35) an beiden Enden der Hülse (30) durch die nachstehende Formel gegeben sind:

$$\omega = [(1 + 2m)/n] \times 180°,$$

wobei

ω die Winkelversetzung zwischen den Vorsprüngen rund um die Hülsenachse ist;
m gleich 0 oder irgendeine positive ganze Zahl ist; und
n die Anzahl der Nuten in jeder der nebeneinanderliegenden Stirnflächen des Ankerkerns und des Kommutatorkörpers ist.

4. Elektromotor nach Anspruch 1 oder Anspruch 2, bei dem dieselbe Mehrzahl Nuten (18, 31) in den nebeneinanderliegenden Stirnflächen des Ankerkerns (14) und des Kommutatorkörpers ausgebildet ist und die relativen Winkelpositionen der Vorsprünge (35) an beiden Enden der Hülse (30) durch die nachstehende Gleichung gegeben sind:

$$\omega = m/n \times 360°,$$

wobei

ω die Winkelversetzung zwischen den Vorsprüngen rund um die Hülsenachse ist;
m gleich 0 oder irgendeine positive ganze Zahl ist; und
n die Anzahl von Nuten in jeder der nebeneinanderliegenden Stirnflächen des Ankerkerns und des Kommutatorkörpers ist.

5. Elektromotor nach Anspruch 3 oder Anspruch 4, bei dem die Winkelversetzung (ω) um einen Betrag (θ) erhöht ist, um eine Phasendifferenz zwischen dem Rotor und Kommutator zu erzeugen.

6. Elektromotor nach irgendeinem vorangegangenen Anspruch, bei dem ein Spalt zwischen der Hülse (30) und wenigstens dem Ankerkern oder wenigstens dem Kommutatorkörper definiert ist.

7. Elektromotor nach irgendeinem vorangegangenen Anspruch, bei dem der Ankerkern (14), die Hülse (30) und der Kommutatorkörper unter Ausbildung einer integralen Baueinheit mit fester axialer Länge miteinander verklebt sind.

**Revendications**

1. Moteur électrique ayant un carter tubulaire (1) fermé à une extrémité, des aimants permanents (2) étant montés sur la paroi intérieure de celui-ci, un embout (3) installé à l'extrémité ouverte du carter (1), des paliers (7, 8) étant dans l'extrémité fermée du carter et l'embout supportant un rotor comportant un noyau (5, 14) d'induit et un collecteur (6) à l'intérieur du carter (1), des balais (11) établissant un contact glissant avec le collecteur (6), des bornes (12) d'entrée reliées aux balais (11), et un manchon (30) intercalé entre les faces d'extrémités juxtaposées du noyau (5, 14) d'induit et le corps collecteur (6), des saillies et des évidements alignant le noyau (5, 14) d'induit, le manchon (3) et le corps collecteur,
CARACTERISE EN CE QUE
chaque extrémité axiale du manchon (30) est pourvue d'une saillie (35) ayant une gorge centrale (36), la face d'extrémité du noyau (5, 14) d'induit est pourvu d'une gorge (18) servant à recevoir la saillie (35) située à une extrémité du manchon (30), et la face d'extrémité du corps commutateur (6) comporte une pluralité de gorges (31) espacées dans la direction circonférentielle, dont l'une reçoit la saillie (35) présente à l'autre extrémité du manchon (30).

2. Moteur électrique selon la revendication 1, dans lequel le manchon est en résine.

3. Moteur électrique selon la revendication 1 ou la revendication 2, dans lequel le même nombre de gorges (18, 31) sont formées dans les faces juxtaposées du noyau (14) d'induit et du corps collecteur, et la position angulaire relative des saillies (35) situées à chaque extrémité du manchon (30) est régie par la formule:

$$\omega = [(1 + 2m)/n] \times 180°$$

où

ω est le décalage angulaire entre les saillies autour de l'axe du manchon;
la valeur de m est 0 ou n'importe quel entier positif; et
n est le nombre de gorges dans chaque face juxtaposée du noyau d'induit et du corps commutateur.

4. Moteur électrique selon la revendication 1 ou la revendication 2, dans lequel le même nombre de gorges (18, 31) sont formées dans les faces juxtaposées du noyau (14) d'induit et du corps commutateur et les positions angulaires relatives des saillies (35) à chaque extrémité du manchon (30) est régi par la formule:

$$\omega = m/n \times 360°$$

où

ω est le décalage angulaire entre les saillies autour de l'axe du manchon;

la valeur de m est 0 ou n'importe quel entier positif; et

n est le nombre de gorges dans chaque face juxtaposée du noyau d'induit et du corps commutateur.

5. Moteur électrique selon la revendication 3 ou la revendication 4, dans lequel le décalage angulaire (ω) est accru d'une valeur (θ) pour créer un déphasage entre le rotor et le collecteur.

6. Moteur électrique selon l'une quelconque des revendications précédentes, dans lequel un entrefer est défini entre le manchon (30) et le noyau d'induit et/ou le corps collecteur.

7. Moteur électrique selon l'une quelconque des revendications précédentes, dans lequel le noyau (14) d'induit, le manchon (30) et le corps collecteur sont réunis les uns aux autres pour former un ensemble unitaire à longueur axiale fixe.

# FIG. 1
(PRIOR ART)

# FIG. 2
(PRIOR ART)

# FIG. 3A
### (PRIOR ART)

# FIG. 3B
### (PRIOR ART)

# FIG. 4

# FIG. 5A

# FIG. 5B

# FIG. 6

# FIG. 7A

# FIG. 7B

# FIG. 8

# F I G. 9

# F I G. 10A

# F I G. 10B

# FIG. 11

35a

120°

30

35a

120°

35b

35b

# FIG. 12

1

10

11

2

2

11

6

9

10

θ